# EUROPEAN PATENT SPECIFICATION

(11) **EP 2 707 924 B1**
(45) Date of publication and mention of the grant of the patent: **24.01.2018**
(21) Application number: 12783042.0
(22) Date of filing: 08.05.2012
(51) Int. Cl.: H01M 2/16, H01M 4/38, H01M 4/46, H01M 10/05, H01M 10/36

(54) **ALKALI METAL ION BATTERY USING ALKALI METAL CONDUCTIVE CERAMIC SEPARATOR**
ALKALIMETALL-IONENBATTERIE MIT EINEM LEITFÄHIGEN ALKALIMETALL-KERAMIK-SEPARATOR
BATTERIE À IONS DE MÉTAL ALCALIN UTILISANT UN SÉPARATEUR EN CÉRAMIQUE CONDUCTRICE DE MÉTAUX ALCALINS

(30) Priority: 10.05.2011 US 201161484406 P; 01.02.2012 US 201213364169
(43) Date of publication of application: 19.03.2014
(73) Proprietor: Field Upgrading Limited, Calgary, AB T2G 1B1 (CA)
(72) Inventor: GORDON, John, Salt Lake City Utah 84103 (US); BHAVARAJU, Sai, West Jordan Utah 84088 (US)
(74) Representative: HGF Limited
(86) International application number: PCT/US2012/036959
(87) International publication number: WO 2012/154750

(56) References cited:
- US-A- 5 648 183
- US-A- 6 033 343
- US-A1- 2002 150 818
- US-A1- 2006 226 022
- US-A1- 2006 257 734
- US-A1- 2009 061 288
- US-A1- 2009 189 567
- US-A1- 2011 104 526
- ZHANG ET AL: "A review of the electrochemical performance of alloy anodes for lithium-ion batteries", JOURNAL OF POWER SOURCES, ELSEVIER SA, CH, vol. 196, no. 1, 1 January 2011 (2011-01-01), pages 13-24, XP027261298, ISSN: 0378-7753 [retrieved on 2010-07-13]

## Description

### Technical Field

The present embodiments relate to batteries. More specifically, the present embodiments relate to a new type of battery in which the metal that is transported across the separator may be different than the material that is oxidized/reduced at the electrodes.

### Background

Our society has come to rely on batteries to power a myriad of devices, including computers, cell phones, portable music players, lighting devices, as well as many other electronic components. Nevertheless, there is an ongoing need for further advances in battery technology. For example, there is still a significant need for economical batteries that can power automobiles or provide load-leveling capabilities for wind, solar or other energy technologies. Furthermore, the "information age" increasingly demands portable energy sources that provide lighter weight, higher energy, longer discharge times, more "cycles," and smaller customized designs. To achieve these advances, technologists continue to work to develop batteries with higher and higher energy densities while still providing acceptable safety, power densities, cost, and other needed characteristics.

U.S. Patent No. 8,012,621, which was filed by Joshi, et. al., is an example of battery technology that is currently being researched. U.S. Patent No. 8,012,621 describes a battery cell where a metal hydride is the negative electrode and a nickel hydroxy-oxide electrode is the positive electrode. In both positive and negative electrode chambers, there is an alkaline electrolyte comprised of alkali metal hydroxide dissolved in a water solvent. The patent discloses a substantially nonporous alkali metal ion conductive ceramic membrane to separate the electrode compartments. In this patent, "substantially nonporous" means that at least a portion of the cross-section of the membrane has little or no through porosity such that transport across the membrane primarily must occur through the membrane lattice structure and channels rather than through pores. During operation of the cell described in this patent, an alkali cation carries the charge during charging/recharging of the battery (rather than the hydroxyl ion that is used as part of the reaction at the electrode). Advantages of this system include a prevention of undesirable species migration from one electrode to another. This patent may also result in improved columbic efficiency as well as negligible self-discharge between cycles and during storage.

Additionally, U.S. Patent Application Serial No. 12/022,381 represents another type of battery technology. In U.S. Patent Application Serial No. 12/022,381, a battery cell is described in which a zinc negative electrode is utilized with a multitude of different positive electrode materials (such as, for example, MnO₂, AgO or Ag₂O, NiOOH, O₂, HgO, CdO, Cu₂O). In all these cases, an alkaline electrolyte is utilized on both sides of the cell, and this alkaline electrolyte is understood to be a water-based material. This system provides the advantage of having a non-porous membrane separating anode and cathode, resulting in high columbic efficiency and a prevention of self discharge.

US 5,648,183 A discloses an Al/S cell with separate anolyte and catholyte compartments separated by a non-porous K-conducting separator, the electrolyte in both compartments being an aqueous, alkaline electrolyte.

At the same time, the above-recited patent documents all utilize an aqueous (alkaline) electrolyte. However, there are candidate negative and positive electrode materials that are not compatible with aqueous electrolytes. These aqueous-incompatible electrode materials offer advantages in terms of cyclability, energy density and cost per energy unit. For example, magnesium is a relatively low cost and energy dense electrode material with a very negative reduction potential (relative to hydrogen). In fact, use of a magnesium electrode can result in a very low cost per energy unit when coupled with many candidate electrodes with higher reduction potentials. However, magnesium is not compatible with water since it reacts with water, Aluminum is another low cost electrode material candidate material with similar advantages to magnesium but also is not compatible with an alkaline, water-based electrolyte. Thus, magnesium and aluminum cannot be used as the electrode material in the above-recited systetms.

Accordingly, there is a need in the industry for a new type of battery that does not require an aqueous electrolyte and can use materials, such as magnesium and aluminum, as the electrode material. Such a device is disclosed herein.

### SUMMARY

In a first aspect there is provided a battery comprising a first electrode which is a metal that is not an alkali metal; a second electrode comprising an oxidized S or h material that is capable of being electrochemically reduced by the metal of the first electrode; an alkali-ion conductive, substantially non-porous separator disposed between the first and second electrode; a first electrolyte contacting the first electrode, the first electrolyte comprising: a solvent which is non-reactive with the metal; and a salt bearing an alkali ion that may be conducted through the separator, wherein the salt is at least partially soluble in the solvent; a second electrolyte contacting the second electrode wherein the second electrolyte at least partially dissolves the salt that forms upon the oxidized material being electrochemically reduced characterised in that the solvent is a polar organic solvent or an ionic liquid.

In a second aspect there is provided a method of charging or discharging a battery having a first electrode which is a metal A, wherein metal A is not an alkali metal, a second electrode comprising an oxidized S or h material capable of being electrochemically reduced by the metal A, an alkali-ion conductive, substantially non-porous separator disposed between the first and second electrode; a first electrolyte contacting the first electrode comprised of a polar solvent, wherein the polar solvent is a polar organic solvent or an ionic liquid which is non-reactive with metal A and a salt bearing the alkali-ion, wherein the salt is at least partially soluble in the polar solvent, and a second electrolyte contacting the second electrode, the second electrolyte comprising a solvent that at least partially dissolves the alkali salt that forms upon the reduction of the second electrode; wherein the method is:
(i) a method of charging a battery comprising:
   applying an electric charging potential to the first and second electrodes to cause the following reaction to occur at the first electrode:
      if A is a divalent metal:

         AX₂ + 2Me⁺ + 2e⁻ → A + 2MeX;
      if A is a trivalent metal:

         AX₃ + 3Me⁺ + 3e⁻ → A + 3MeX; and
      if A is a monovalent metal:

         AX + Me⁺ + e⁻ → A + MeX,
      X is an anion;
      wherein applying the electric charging potential also causes oxidation at the second electrode resulting in the release of alkali metal ions, Me⁺, from the solvent and conducting Me⁺ ions across the alkali ion conducting separator from the second electrode to the first electrode; or
(ii) a method of discharging a battery comprising:
   generating an electric potential between the first and second electrodes to cause the following reaction to occur at the first electrode:
      A + 2MeX + AX₂ → 2Me⁺ + 2e⁻,

         if A is a divalent metal,
      A + MeX + AX → Me⁺ + e⁻,

         if A is a monovalent metal,
      A + 3MeX + AX₃ → 3Me⁺ + 3e⁻,

         if A is a trivalent metal,
      X is an anion;
      wherein generation of the electric potential also causes reduction at the second electrode resulting in anions which form salts with alkali metal ions, Me⁺; and conducting Me⁺ ions across the alkali ion conducting separator from the first electrode to the second electrode.

In a third aspect there is provided a use of a rechargeable battery for inhibiting dendrite formation; the rechargeable battery comprising the first electrode which is a metal, wherein the metal is not an alkali metal, and a second electrode comprising an S or I₂ oxidized material capable of electrochemical reduction by the metal; an alkali-ion conductive, substantially non-porous separator disposed between the first and second electrodes; and a first electrolyte contacting the first electrode comprising a polar solvent, which is non-reactive with the first electrode metal and a salt bearing an alkali-ion where the salt is at least partially soluble in the polar solvent; and a second electrolyte contacting the second electrode, the second electrolyte comprising a solvent which at least partially dissolves the alkali salt that forms upon reduction of the second electrode; characterised in that the polar solvent is a polar organic solvent or an ionic liquid.

The present embodiments may be designed in which the charge carrier that transports across the membrane is a cation that is different from the cation formed/reacted at the surface of the electrode. By having the cation species that moves across the membrane be different than the species involved in the reaction, there is a reduction in the tendency of the cell to form dendrites that may penetrate the membrane. When a metal is formed at the negative electrode upon recharge of the battery, the cation that is used to form the metal may be derived from a salt dissolved in the electrolyte rather than from a cation that has transported across the membrane.

For example, the present embodiments may be designed in which a magnesium or aluminum electrode is used in conjunction with a sodium conductive membrane (such as a NASICON membrane). In this system, sodium ions within the electrolyte will act as a charge carrier that will be transported across the membrane. These sodium ions may be from an alkali metal salt that is dissolved (at least partially) in the electrolyte solution. This alkali metal salt may be, for example, sodium chloride, sodium hydroxide, sodium triflate or the like of combinations thereof. This electrolyte solution includes solvent. The solvent may be one of many polar organic solvents which do not react with magnesium/aluminum such as propanol, ethylene glycol, glycerine, dimethyl sulfoxide, acetronitrile or combinations of such solvents. Alternatively ionic liquids such as 1-Butyl-3-methylimidazolium hexafluorophosphate (BMIM-PF₆) or Trioctylmethylammonium bis (trifluoromethyl-sulfonyl) imide may be used. During discharge of the battery, magnesium/aluminum halide or magnesium/aluminum hydroxide or magnesium/aluminum triflate form as the magnesium/aluminum metal on the electrode surface oxidizes. As part of this process, sodium ions from the electrolyte solution will transport across the membrane. During a recharging reaction, the opposite chemical reactions occur. Rather than having the magnesium/aluminum ions transported across the membrane, such magnesium/aluminum ions are dispersed throughout the negative electrode compartment (within the electrolyte solution). Sodium ions transport across the membrane (and not the magnesium/aluminum ions), thereby reducing the likelihood of dendrite formation. Dendrite formation can be further minimized or impeded by the addition of polymers stable with the electrode material and solvent, for example polytetrafluoroethylene (PTFE), Polyvinylidene Fluoride (PVDF) or the like.

Examples of a negative or first electrode discharge reaction (using magnesium as the example) are given below. During this discharge reaction, the metal is oxidized into an ionic state:

Mg + 2NaOH or 23NaCl → MgCl₂ or Mg(OH)₂ + 2Na⁺ + 2e⁻.

More generalized, these reactions can be written as follows:

A+ 2MeX → AX₂ + 2Me⁺ + 2e⁻ (where A is a divalent metal), or

A + MeX → AX + Me⁺ + e⁻ (where A is a monovalent metal), or

A + 3MeX → AX₃ + 3Me⁺ + 3e⁻ (where A is a trivalent metal).

If A is a divalent metal, this metal at the first electrode forms divalent cations upon oxidation (such as Mg, Ca, Zn or Be). If A is a monovalent metal, this metal at the first electrode forms monovalent cations upon oxidation (such as Li, Na, and K). If A is a trivalent metal, this metal at the first electrode forms trivalent cations upon oxidation (such as Al). Me is the alkali metal and MeX is the alkali metal salt, Me⁺ is the alkali metal ion that may conduct through the membrane, and X is the anion which may be a halide, or hydroxyl ion.

Examples of a negative or first electrode recharge reaction (using magnesium as the example) are given below. During this recharge reaction, the metal is regenerated.

MgCl₂ or Mg(OH)₂ + 2Na⁺ +2e⁻ → Mg + 2NaOH or 2NaCL

More generalized, these reactions can he written as follows:

AX₂ + 2Me⁺ + 2e⁻ → A + 2MeX (where A is a divalent metal), or

AX + Me⁺ + e⁻ → A + MeX (where A is a monovalent metal), or

AX₃ + 3Me⁺ + 3e⁻ → A + 3MeX (where A is a trivalent metal).

Of course, in an electrolytic cell, there must be a positive or second electrode that is used with the first electrode. During discharge, some of these reactions may be written as follows:

3S + 2Na⁺ + 2e⁻ → Na₂S₃;

I₂ + 2Na⁺ + 2e⁻ → 2NaI; or

S + H₂O + 2e⁻ → OH⁻ + HS⁻.

The first two of these second electrode reactions do not require the presence of water. Accordingly for these reactions, polar organic solvents or ionic liquids may be used to at least partially dissolve the forming salt (e.g. Na₂S₃, NaI, or NaCl). Ethylene glycol and N-methyl formamide, dimethyl sulfoxide, etc. are examples of solvents which effectively dissolve the salt, but are not water-based. In the last electrode reaction indicated above, water may be used as the solvent. In fact, in such reactions, water is used as a reactant to form hydroxyl ion that is part of the chemical reaction occurring at the electrode.

It should be noted that the present embodiments may provide an advance with respect to the use of magnesium and/or aluminum in batteries. For example, batteries using magnesium were difficult to use because the magnesium ions often caused a failure to occur at the cathode. Specifically, the magnesium ions may be incompatible with the cathode solvent, may form undesirable compounds at the cathode, and/or may be inculcated (incorporated) into the electrode or the membrane, etc. However, the present embodiments address the difficulty associated with magnesium ions at the cathode by essentially converting the system into one that uses sodium ions, rather than magnesium ions, at the cathode. In other words, it is sodium ions, not magnesium ions, that will transport across the membrane and will be reacted at the cathode. Thus, the cathode is separated from magnesium ions, thereby making the cell less prone to failure and/or less prone to the problems associated with the use of magnesium ions at the cathode.

### Brief Description of the Drawings

Figure 1 is schematic diagram of an embodiment of a cell; and
Figure 2 is a schematic diagram of a cell in which magnesium is used at the first electrode and sulfur is used at the second electrode;
Figure 3 is a schematic diagram of a cell in which aluminum is used at the first electrode and sulfur is used at the second electrode; and
Figure 4 is a graph of cell voltage over time with respect to a cell having Zn/Zn(OH)₂ at one electrode and Ni(OH)₂/NiOOH at the other electrode as described in the reference example.

### DETAILED DESCRIPTION

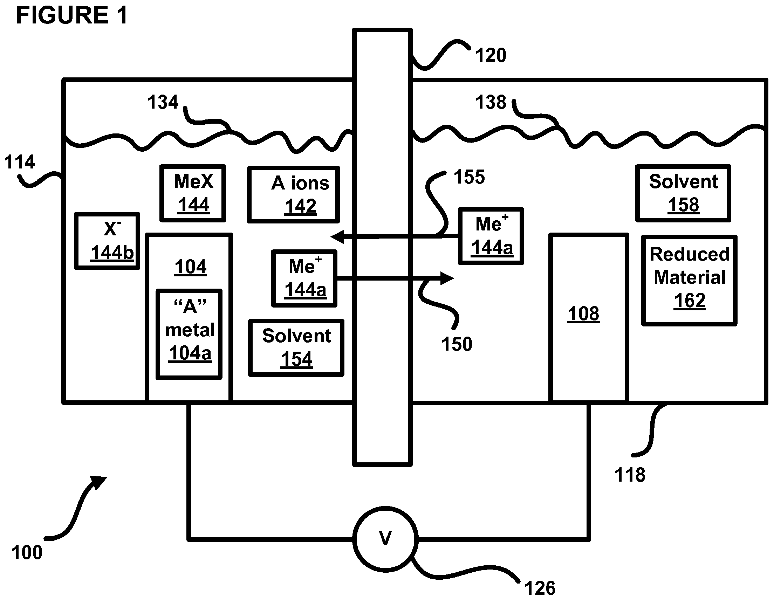

Referring now to Figure 1, a schematic view of a battery 100 according to the present embodiments is illustrated. As shown in Figure 1, the battery 100 includes a first electrode 104 and a second electrode 108. The first electrode 104 may be housed within a first compartment 114 and the second electrode 108 may be housed within a second compartment 118. The first compartment 114 and the second compartment 118 may be separated by a separator 120. As known in the art, the first electrode 104 and the second electrode 108 may be connected to a voltage source 126. When connected to the voltage source, the battery 100 may either be operated in a charging or recharging mode. Those skilled in the art will appreciate how to construct the battery 100 so that it may be discharged (and thus produce a voltage) or may be charged (and thus receive the voltage to recharge the system).

The separator 120 that is used in the battery 100 may be an alkali-ion conductive substantially non-porous separator 120 that is disposed between the first and second electrodes 104, 108. As used herein, the term "substantially nonporous" means that at least a portion of the cross-section of the separator 120 has little or no through porosity such that transport across the separator 120 primarily must occur through the separator's lattice structure and channels rather than through pores. Because the separator 120 is "alkali-ion conductive," alkali metal ions (such as, for example, sodium ions, lithium ions, potassium ions, etc.) may pass through the separator 120. In other words, the alkali metal ions may pass through the separator 120 from the first compartment 114 to the second compartment 118 (and vice versa). Generally, the separator 120 will be a "specific alkali ion conductor," meaning that it is specifically designed to transport a certain, specific alkali metal ion across the membrane (such as, for example, specifically transporting sodium ions across the separator 120, specifically transporting lithium ions across the separator, etc.).

In some embodiments, the separator 120 is a substantially non-porous, electronically insulating, ceramic separator material. In other embodiments, the separator 120 is a substantially non-porous glass separator material. In other embodiments, the separator 120 comprises a material having the formula Me₁₊ₓZr₂SiₓP₃₋ₓO₁₂ where 0.1≤x≤3, where Me is Na, K, or Li. In further embodiments, the separator 120 comprises a material having the formula Na₁₊ₓZr₂SiₓP₃₋ₓO₁₂ where 0.1≤x≤3. Yet additional embodiments may be made in which the separator 120 comprises a material having the formula Me₅RESi₄O₁₂ where Me is Na, K, or Li, where RE is Y, Nd, Dy, or Sm, or any mixture thereof. Other embodiments are designed in which the separator 120 comprises a non-stoichiometric alkali-deficient material having the formula (Me₅RESi₄O₁₂)_{1-δ}, (RE₂O₃·2SiO₂)δ, where Me is Na, K, or Li, where RE is Nd, Dy, or Sm, or any mixture thereof and where δ is the measure of deviation from stoichiometry. Additional embodiments may be designed in which the separator 120 comprises a material with the formula Li₁₊ₓAlₓTi₂₋ₓ(PO₄)₃ or Li_{1.3}Al_{0.3}Ti_{1.7}(PO₄)₃. It should be noted that regardless of the particular material used to construct the separator 120, this separator 120 may be a monolithic flat plate, a monolithic tube, a monolithic honeycomb, or supported structures of the foregoing. In further embodiments, the separator 120 may comprise a layered alkali ion conducting ceramic-polymer composite membrane. This type of ceramic-polymer composite membrane may comprise alkali ion-selective polymers layered on alkali ion conducting ceramic solid electrolyte materials. Yet additional embodiments may be designed in which the separator 120 is a NaSICON, KSICON or LiSICON membrane obtained from Ceramatec, Inc., which is located in Salt Lake City, Utah. Other types of alkali-ion conductive substantially non-porous separators may also be used in the present embodiments.

In some embodiments, the separator 120 is selected from the group consisting of a glass separator material, an electronically insulating, ceramic separator material, and a layered alkali ion conducting ceramic-polymer composite membrane comprising alkali ion-selective polymers layered on alkali ion conducting ceramic solid electrolyte material.

The first and second electrodes 104, 108 will now be described. The first electrode 104 comprises a metal. This metal is designed as metal "A" 104a. This metal may be, for example, magnesium or aluminium. More generally, the metal may be Mg, Al, Ca, Fe, Zn or Be. During discharge of the battery 100, the metal at the first electrode 104 will be converted from its metallic state to its ionic state. These reactions may be represented as follows:

A+ 2MeX → AX₂,+ 2Me⁻ + 2e⁻ (where A is a divalent metal), or

A + MeX → AX + Me⁺ + e⁻ (where A is a monovalent metal), or

A + 3MeX → AX₃ + 3Me⁺ + 3e⁻ (where A is a trivalent metal).

For example, if magnesium is the metal, this discharge reaction may be written as follows:

Mg + 2NaOH or 2NaCl → MgCl₂ or Mg(OH)₂ + 2Na⁺ + 2e⁻.

As noted above, the battery 100 may also be recharged. During this recharge reaction, the metal is regenerated.

AX₂ + 2Me⁺ + 2e⁻ → A + 2MeX (where A is a divalent metal), or

AX + Me⁺ + e⁻ → A + MeX (where A is a monovalent metal), or

AX₃ + 3Me⁺ + 3e⁻ → A + 3MeX (where A is a trivalent metal).

For example, if magnesium is the metal, this recharging reaction may be written as follows:

MgCl₂ or Mg(OH)₂ + 2Na⁺ + 2e⁻ → Mg + 2NaOH or 2NaCl.

As described herein, the charging/discharging reactions of the first electrode 104 will produce or consume ions of the metal 104a. These ions are present in the first compartment 114 (as shown by "A" ions 142). More specifically, as shown in Figure 1, a first electrolyte 134 is present in the first compartment 114 (proximate the first electrode 104) and the ions that are produced/consumed during the reactions of the first electrode 104 constitute part of this first electrolyte 134. The first electrolyte 134 contacts the first electrode 104.

The first electrolyte 134 also comprises a quantity of an alkali metal salt, as represented in Figure 1 as MeX 144. This alkali metal salt may be an alkali metal halide, an alkali metal hydroxide, an alkali metal triflate, etc. Of course, this MeX may actually disassociate into Me⁺ ions and X⁻ ions. Accordingly, for purposes of clarity. Figure 1 also shows quantities of Me⁺ ions 144a and X⁻ ions 144b. As explained herein, the alkali metal Me⁺ may be conducted through the separator 120 during the discharging reaction (as indicated by arrow 150) so that it can access the second compartment 118.

The first electrolyte 134 also comprises a solvent 154, such as a polar solvent. The salt MeX 144, as well as the ions 142, 144a, 144b, will be at least partially soluble in the solvent 154. The solvent is designed such that it will not react with metal ions ("A" ions). In some embodiments, the solvent may be propanol, ethylene glycol, glycerine, dimethyl sulfoxide, acetronitrile or combinations of such solvents. Alternatively ionic liquids such as 1-Butyl-3-methylimidazolium hexafluorophosphate (BMIM-PF₆) or Trioctylmethylammonium bis (trifluoromethyl-sulfonyl) imide may be used as the solvent 154.

The second electrode 108 will now be described. The second electrode 108 comprises an oxidized S or I₂ material that is capable of being electrochemically reduced by the metal of the first electrode 104 (during the discharging reaction).

A second electrolyte 138 will also be positioned within the second compartment 118 (proximate the second electrode 108.) The second electrolyte 138 contacts the second electrode 108. This second electrolyte 138 will at least partially dissolve the reduced material 162 that is being produced as part of the electrochemical reduction reaction (which is designated as Reduced Material 162 in Figure 1). In order to facilitate such dissolving of the reduced material 162, the second electrolyte 138 may comprise a solvent 158 (such as a polar solvent). In some embodiments, the second electrolyte 138 may comprise the same materials/chemicals that are used to construct the first electrolyte 134. However, in other embodiments the first electrolyte 134 and the second electrolyte 138 may comprise different materials/chemicals. Examples of the chemicals that may be used as the second solvent 158 include propanol, ethylene glycol, glycerine, dimethyl sulfoxide, acetronitrile or combinations of such solvents. Alternatively ionic liquids such as 1-Butyl-3-methylimidazolium hexafluorophosphate (BMIM-PF₆) or Trioctylmethylammonium bis (trifluoromethyl-sulfonyl) imide may be used as the second solvent 158.

The second electrolyte 138 may further comprise a quantity of the alkali metal ions (Me⁺) 144a. These ions 144a may be conducted through the separator 120 (such as, for example, during a recharging reaction in which the reduced material 162 is oxidized back onto the second electrode 108 and alkali metal ions arc produced). This conduction of the ions 144a through the separator 120 is shown by arrow 155.

It should be noted that the metal that is used as the "A" metal 104a of the first electrode 104 is not an alkali metal. For example, the "A" metal 104a may be magnesium or aluminum. The "A" ions 142 that are produced/consumed during the charging/discharging of the battery 100 are not the ions that will be transported across the separator 120. Rather, alkali metal ions 144a are transmitted across the separator 120. Such alkali metal ions 144a are not reacted at the electrodes 104, 108 during charging or recharging. Having the materials at the electrodes be different than the alkali metal that flows across the separator 120 may be advantageous in that it limits or reduces the possibility of dendrite formation. Specifically, because the materials that are oxidized/reduced at the electrodes do not "flow" into another compartment, the likelihood that such materials will form a dendrite that penetrates the separator 120 is substantially reduced and/or eliminated.

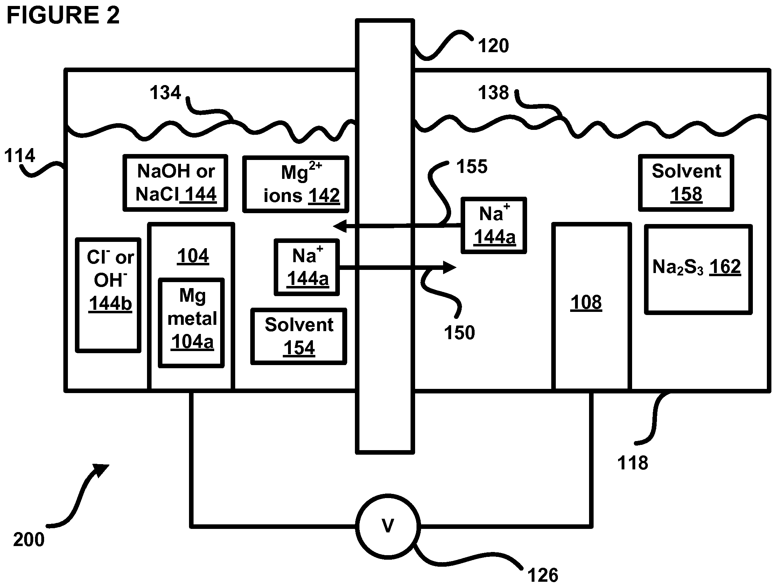

Referring now to Figure 2, another example of a battery 200 is shown. The battery 200 is similar to the battery 100 of Figure 1. However, the difference between Figure 1 and Figure 2 is that the battery 200 provides a specific example of the materials used in the battery cell. Specifically, in the embodiment of Figure 2, the "A" metal used as the first electrode 104 is magnesium and the alkali metal salt 144 is NaCl or NaOH. (In other words, the metal used in the electrode is Mg metal 104a.) The alkali metal ions 144a are sodium ions while the ions 144b are either OH⁻ ions or Cl⁻ ions. Mg²⁺ ions 142 are formed from the oxidation reaction at the first electrode 104. The separator 120 is a material that may conduct sodium ions across the separator 120, such as, for example, a NaSICON membrane available from the Ceramatec, Inc., company of Salt Lake City, Utah. (In this system, 2Na⁺ ions may transport across the NaSICON membrane for every Mg²⁺ ion formed.) The solvent 154 is selected such that NaOH or NaCl (and the Na⁺, OH⁻, Cl⁻ and Mg²⁺ ions) will at least partially dissolve in the solvent.

The discharge and charge reactions of this Mg system are summarized below:
Discharge:

   Mg + 2NaOH or 2NaCl → MgCl₂ or Mg(OH)₂ + 2Na⁺ + 2e⁻
Charge:

   MgCl₂ or Mg(OH)₂ + 2Na⁺ + 2e- → Mg + 2NaOH or 2NaCl

With respect to the second electrode 108, this electrode 108 may be a sulfur electrode that reacts according to the following equations:
Discharge:

   3S + 2Na⁺ + 2e⁻ → Na₂S₃
Charge:

   Na₂S₃ → 3S + 2Na⁺ + 2e⁻

In this embodiment, the "reduced material" that is formed upon the oxidation of the magnesium metal is Na₂S₃ 162. The solvent 158 is selected such that it will at least partially dissolve the formed Na₂S₃.

This particular battery 200 has significant advantages. For example, the use of Mg metal is desirable as this material is very inexpensive and provides a good electric potential and battery performance. Also, the Mg may be used in the battery 200 because there is no water (or very minimal water) in the system. Further, the Mg²⁺ ions that are formed upon oxidation of the first electrode 104 are not transported across the separator 120; rather, it is the sodium ions 144a 144a that are carried across the NaSICON membrane.

Additionally, the present battery 200 shown in Figure 2 provides a significant voltage potential. For example, a voltage of 1.77 V could be obtained during discharge (depending upon the concentrations of the relevant species).

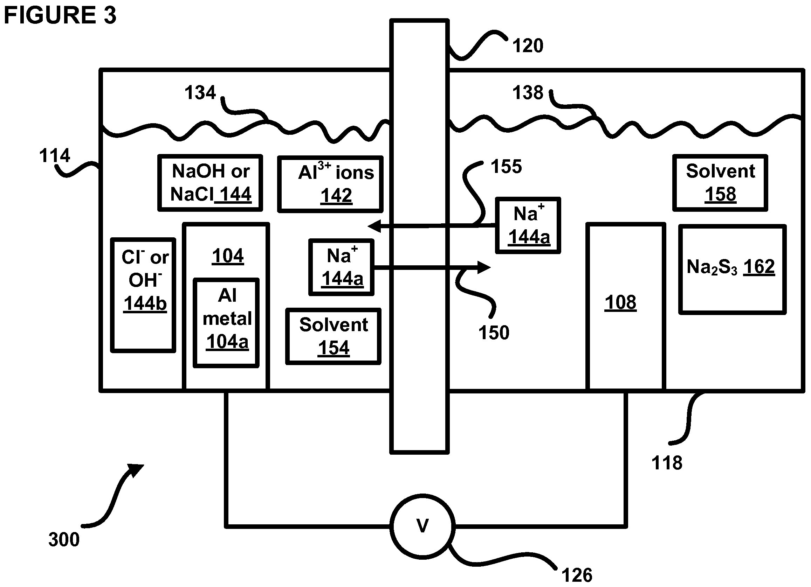

Referring now to Figure 3, another example of a battery 300 is shown. The battery 300 is similar to the battery 200 of Figure 2. However, in the embodiment of Figure 3, the "A" metal used as the first electrode 104 is aluminum and the alkali metal salt 144 is NaCl or 2NaOH. (In other words, the metal of the first electrode is Al metal 104a.) Al³⁺ ions 142 will be found in the first electrolyte 134. Thus, the ions 144b are either OH⁻ ions or Cl⁻ ions. Al³⁺ ions are formed from the electrode 104. The alkali metal ions 144a are sodium ions. The separator 120 is a material that may conduct sodium ions across the separator 120, such as, for example, a NaSICON membrane available from the Ceramatec, Inc., company of Salt Lake City, Utah. (In this system, 3Na⁺ ions may transport across the membrane for every Al³⁺ ion formed during the discharging reaction.) The solvent 154 is selected such that NaOH or NaCl (and the Na⁺, OH⁻, Cl⁻ and Al³⁺ ions) will at least partially dissolve in the solvent.

The discharge and charge reactions of this Al system are summarized below:
Discharge:

   Al + 3NaOH or 3NaCl → AlCl₃ or Al(OH)₃ + 3Na⁺+ 3e⁻
Charge:

   AlCl₃ or Al(OH)₃ + 3Na⁺ + 3e⁻ → Al + 3NaOH or 3NaCl

With respect to the second electrode 108, this electrode 108 may be a sulfur electrode that reacts according to the following equations:
Discharge:

   4.5 S + 3Na⁺ + 3e⁻ → 1.5 Na₂S₃
Charge:

   1.5 Na₂S₃ → 4.5 S + 3Na⁺ + 3e⁻

Thus, in this embodiment, the "reduced material" that is formed upon the oxidation of the magnesium metal is Na₂S₃ 162. The solvent 158 is selected such that it will at least partially dissolve the formed Na₂S₃.

This particular battery 300 has significant advantages. For example, the use of Al metal is desirable as this material is very inexpensive and provides a good electric potential and battery performance. Also, the Al may be used in the battery because there is no water (or very minimal water) in the system. Further, the Al ions that are formed upon oxidation of the first electrode 104 are not transported across the separator 120; rather, it is the sodium ions 144a that are carried across the membrane.

Additionally, the present battery 300 shown in Figure 3 provides significant voltage potential. For example, a voltage of 1.05 V could be obtained during discharge (depending upon the concentrations of the species).

Referring now to all of the Figures generally, the present embodiments also provide for a method of charging or discharging a battery. Specifically, a battery is obtained, which may be any of the batteries 100, 200, 300 described herein. The charging of the battery will occur when an electric charging potential (voltage) is supplied by the source 126. This application of the potential causes the following reactions to occur:
if A is a divalent metal:

   AX₂ + 2Me⁺ +2e⁻ → A + 2MeX;
if A is a trivalent metal:

   AX₃ + 3Me⁺ +3e⁻ → A + 3MeX; and
if A is a monovalent metal:

   AX + Me⁺ +e- → A + MeX.

Additionally, wherein applying the electric charging potential also causes oxidation at the second electrode 108 resulting in the release of alkali metal ions, Me⁺, from the solvent 158 and conducting Me⁺ ions 144a across the alkali ion conducting separator 120 from the second electrode 108 to the first electrode 104.

The present embodiments also provide for a method of discharging a battery. Specifically, a battery is obtained, which may be any of the batteries 100, 200, 300 described herein. As part of the discharging process, an electric potential between the first and second electrodes 104, 108 is generated at least in part due to the following reaction occurring at the first electrode 104:

A + 2MeX → AX₂ + 2Me⁺ +2e⁻,

if A is a divalent metal,

A + MeX → AX + Me⁺ +e⁻,

if A is a monovalent metal,

A + 3MeX → AX₃ + 3Me⁺ +3e⁻,

if A is a trivalent metal.

Additionally, generation of the electric potential also causes reduction at the second electrode 108 resulting in anions which form salts with alkali metal ions, Me⁺; and resulting in conducting Me⁺ ions across the alkali ion conducting separator 120 from the first electrode 104 to the second electrode 108.

A method of inhibiting dendrite formation is also taught herein. This method involves obtaining a battery. This battery may be any of the batteries 100, 200, 300 taught herein. The batteries 100, 200, 300 have a first electrode 104 comprising the non-alkali metal and a second electrode 108 comprising the S or I₂ oxidized material capable of electrochemical reduction by the metal. The method further comprises the step of disposing an alkali-ion conductive, substantially non-porous separator 120 disposed between the first and second electrodes and where a first electrolyte 134 contacting the first electrode 104 comprised of a polar solvent 154 which is non-reactive with the metal and a salt bearing the alkali-ion where the salt is at least partially soluble in the polar solvent 154, and second electrolyte 138 contacting the second electrode 108, the second electrolyte 138 comprising a solvent 158 which at least partially dissolves the alkali salt that forms upon reduction of the second electrode.

As described in the systems of Figures 1-3, the present embodiments may provide advantages over previous batteries that use magnesium and/or aluminum-type at the cathode. For example, batteries using magnesium at the cathode can be difficult to implement because the magnesium ions may cause the cathode to fail (and thus, fail the battery). Specifically, the magnesium ions may be incompatible with the solvent used in the cathode side, may react to form undesirable compounds at the cathode, and/or may be inculcated (incorporated) into the electrode or the membrane, etc., thereby failing the system. However, the present embodiments address the difficulty associated with magnesium ions at the cathode by essentially converting the system into one that uses sodium ions, rather than magnesium ions, at the cathode. In other words, it is sodium ions, and not magnesium ions, that will transport across the membrane and will be reacted at the cathode. (In fact, in some embodiments, the cathode may be essentially free of magnesium/magnesium ions.) Thus, the cathode system is separated from magnesium ions, thereby reducing the likelihood that the magnesium ions will react with the cathode, will be incompatible with the cathode solvent, etc. Accordingly, the cell, as a whole, may be less prone to failure.

### REFERENCE EXAMPLE NOT FALLING WITHIN THE SCOPE OF THE CLAIMS

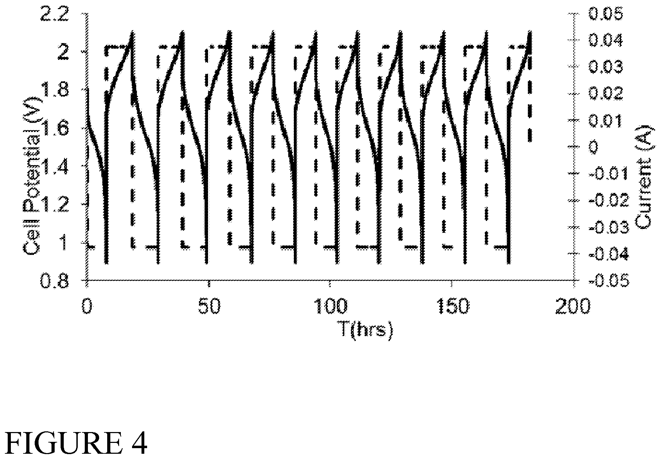

A Zn/Zn(OH)₂ anode was utilized with sodium hydroxide electrolyte, while at the cathode, Ni(OH)₂/NiOOH was utilized also with sodium hydroxide electrolyte. A nonporous NaSICON sodium ion conducting membrane separated anode from cathode. Figure 4 shows a plot of cell voltage as the current was cycled between an initial discharge then repeated charging/discharging processes. The membrane is only conductive to sodium ions so the ionic current was carried by sodium ions while sodium ions did not participate in either anode or cathode reactions.

## Claims

1. A battery (100) comprising:
a first electrode (104) which is a metal that is not an alkali metal;
a second electrode (108) comprising an oxidized S or I₂ material that is capable of being electrochemically reduced by the metal of the first electrode (104);
an alkali-ion conductive, substantially non-porous separator (120) disposed between the first (104) and second electrode (108);
a first electrolyte (134) contacting the first electrode (104), the first electrolyte (134) comprising:
a solvent (154) which is non-reactive with the metal; and
a salt bearing an alkali ion that may be conducted through the separator (120), wherein the salt is at least partially soluble in the solvent (154);
a second electrolyte (138) contacting the second electrode (108) wherein the second electrolyte (138) at least partially dissolves the salt that forms upon the oxidized material being electrochemically reduced;
**characterised in that** the solvent is a polar organic solvent or an ionic liquid.

2. The battery according to claim 1, wherein the separator (120) is a solid alkali metal ion conducting material, wherein the alkali metal is Na, K, or Li.

3. The battery according to claim 1 or claim 2, wherein the separator (120) is selected from the group consisting of a glass separator material, an electronically insulating, ceramic separator material, and a layered alkali ion conducting ceramic-polymer composite membrane comprising alkali ion-selective polymers layered on alkali ion conducting ceramic solid electrolyte material.

4. The battery according to any of claims 1 to 3, wherein the metal comprises aluminum, magnesium, calcium, zinc, beryllium or iron.

5. The battery according to any preceding claim, wherein the first electrolyte (134) and the second electrolyte (138) are the same.

6. A method of charging or discharging a battery having a first electrode which is a metal A, wherein metal A is not an alkali metal, a second electrode comprising an oxidized S or I₂ material capable of being electrochemically reduced by the metal A, an alkali-ion conductive, substantially non-porous separator disposed between the first and second electrode; a first electrolyte contacting the first electrode comprised of a polar solvent,
wherein the polar solvent is a polar organic solvent or an ionic liquid which is non-reactive with metal A and a salt bearing the alkali-ion, wherein the salt is at least partially soluble in the polar solvent, and a second electrolyte contacting the second electrode, the second electrolyte comprising a solvent that at least partially dissolves the alkali salt that forms upon the reduction of the second electrode;
wherein the method is:
(i) a method of charging a battery comprising:
applying an electric charging potential to the first and second electrodes to cause the following reaction to occur at the first electrode:
if A is a divalent metal:
AX₂ + 2Me⁺ + 2e⁻ → A + 2MeX;
if A is a trivalent metal:
AX₃ + 3Me⁺ + 3e⁻ → A + 3MeX; and
if A is a monovalent metal:
AX + Me⁺ + e⁻ → A +
X is an anion;
wherein applying the electric charging potential also causes oxidation at the second electrode resulting in the release of alkali metal ions, Me⁺, from the solvent and conducting Me⁺ ions across the alkali ion conducting separator from the second electrode to the first electrode; or
(ii) a method of discharging a battery comprising:
generating an electric potential between the first and second electrodes to cause the following reaction to occur at the first electrode:
A + 2MeX → AX₂ + 2Me⁺ + 2e⁻,
if A is a divalent metal,
A + MeX → AX + Me⁺ + e⁻,
if A is a monovalent metal,
A + 3MeX → AX₃ + 3Me⁺ + 3e⁻,
if A is a trivalent metal,
X is an anion;
wherein generation of the electric potential also causes reduction at the second electrode resulting in anions which form salts with alkali metal ions, Me⁺; and conducting Me⁺ ions across the alkali ion conducting separator from the first electrode to the second electrode.

7. The method of claim 6, wherein the separator is a solid alkali metal ion super ion conducting material, wherein the alkali metal is Na, K, or Li.

8. The method of claim 6 or claim 7, wherein the metal A comprises aluminum, magnesium, calcium, zinc, beryllium, or iron.

9. The method of any of claims 6 to 8, wherein the metal A is either a divalent or trivalent metal.

10. The use of a rechargeable battery for inhibiting dendrite formation the rechargeable battery comprising:
the first electrode which is a metal, wherein the metal is not an alkali metal, and a second electrode comprising an S or I₂ oxidized material capable of electrochemical reduction by the metal;
an alkali-ion conductive, substantially non-porous separator disposed between the first and second electrodes; and
a first electrolyte contacting the first electrode comprising a polar solvent, which is non-reactive with the first electrode metal and a salt bearing an alkali-ion where the salt is at least partially soluble in the polar solvent; and a second electrolyte contacting the second electrode, the second electrolyte comprising a solvent which at least partially dissolves the alkali salt that forms upon reduction of the second electrode;
**characterised in that** the polar solvent is a polar organic solvent or an ionic liquid.

11. The use of claim 10, wherein the first electrolyte and the second electrolyte are the same.

12. The use of claim 10, wherein the solvent used as part of the first electrolyte comprises an ionic liquid.

## Patentansprüche

1. Batterie (100), umfassend:
eine erste Elektrode (104), bei der es sich um ein Metall handelt, das kein Alkalimetall ist; eine zweite Elektrode (108), umfassend ein oxidiertes S- oder I₂-Material, das dazu imstande ist, durch das Metall der ersten Elektrode (104) elektrochemisch reduziert zu werden;
einen Alkaliionen leitenden, im Wesentlichen unporösen Separator (120), der zwischen der ersten (104) und zweiten Elektrode (108) angeordnet ist;
einen ersten Elektrolyten (134), der die erste Elektrode (104) kontaktiert, wobei der erste Elektrolyt (134) umfasst:
ein Lösungsmittel (154), das nicht mit dem Metall reaktiv ist; und
ein Salz, das ein Alkaliion trägt, das durch den Separator (120) geleitet werden kann, wobei das Salz zumindest teilweise in dem Lösungsmittel (154) löslich ist;
einen zweiten Elektrolyten (138), der die zweite Elektrode (108) kontaktiert, wobei der zweite Elektrolyt (138) das Salz, das sich bei elektrochemischem Reduzieren des oxidierten Materials bildet, zumindest teilweise löst;
**dadurch gekennzeichnet, dass** das Lösungsmittel ein polares organisches Lösungsmittel oder eine ionische Flüssigkeit ist.

2. Batterie nach Anspruch 1, wobei der Separator (120) ein festes Alkalimetallionen leitendes Material ist, wobei es sich bei dem Alkalimetall um Na, K oder Li handelt.

3. Batterie nach Anspruch 1 oder Anspruch 2, wobei der Separator (120) ausgewählt ist aus Gruppe, bestehend aus einem Glasseparatormaterial, einem elektronisch isolierenden Keramikseparatormaterial und einer mehrschichtigen Alkaliionen leitenden Keramik-Polymer-Verbundmembran, umfassend für Alkaliionen selektive Polymere, die auf ein Alkaliionen leitendes festes Keramikelektrolytmaterial geschichtet sind.

4. Batterie nach einem der Ansprüche 1 bis 3, wobei das Metall Aluminium, Magnesium, Calcium, Zink, Beryllium oder Eisen umfasst.

5. Batterie nach einem vorhergehenden Anspruch, wobei der erste Elektrolyt (134) und der zweiten Elektrolyt (138) gleich sind.

6. Verfahren zum Laden oder Entladen einer Batterie mit einer ersten Elektrode, bei der es sich um ein Metall A handelt, wobei das Metall A kein Alkalimetall ist, einer zweiten Elektrode, umfassend ein oxidiertes S- oder I₂-material, das dazu imstande ist, durch das Metall A elektrochemisch reduziert zu werden, einem Alkaliionen leitenden, im Wesentlichen unporösen Separator, der zwischen der ersten und zweiten Elektrode angeordnet ist; einem ersten Elektrolyten, der die erste Elektrode kontaktiert und aus einem polaren Lösungsmittel besteht,
wobei das polare Lösungsmittel ein polares organisches Lösungsmittel oder eine ionische Flüssigkeit ist, die nicht mit dem Metall A reaktiv ist, und einem Salz, welches das Alkaliion trägt, wobei das Salz zumindest teilweise in dem polaren Lösungsmittel löslich ist,
und einem zweiten Elektrolyten, der die zweite Elektrode kontaktiert, wobei der zweite Elektrolyt ein Lösungsmittel umfasst, welches das Alkalisalz, das sich bei der Reduktion der zweiten Elektrode bildet, zumindest teilweise löst; wobei das Verfahren Folgendes ist:
(i) ein Verfahren zum Laden einer Batterie, umfassend:
Anlegen eines elektrischen Ladepotenzials an die erste und zweite Elektrode, damit die folgende Reaktion an der ersten Elektrode ausgelöst wird:
wenn A ein zweiwertiges Metall ist:
AX₂ + 2Me⁺ + 2e⁻ → A + 2MeX;
wenn A ein dreiwertiges Metall ist:
AX₃ + 3Me⁺ + 3e⁻ → A + 3MeX; und
wenn A ein einwertiges Metall ist:
AX + Me⁺ + e- → A +
X ein Anion ist;
wobei das Anlegen des elektrischen Ladepotenzials ferner eine Oxidation an der zweiten Elektrode bewirkt, die zur Freisetzung von Alkalimetallionen, Me⁺, aus dem Lösungsmittel und Leitung von Me⁺-Ionen durch den Alkaliionen leitenden Separator von der zweiten Elektrode zur ersten Elektrode führt; oder
(ii) ein Verfahren zum Entladen einer Batterie, umfassend:
Erzeugen eines elektrischen Potenzials zwischen der ersten und zweiten Elektrode, damit die folgende Reaktion an der ersten Elektrode ausgelöst wird:
A + 2MeX → AX₂ + 2Me⁺ + 2e⁻,
wenn A ein zweiwertiges Metall ist,
A + MeX → AX + Me⁺ + e⁻,
wenn A ein einwertiges Metall ist,
A + 3MeX → AX₃ + 3Me⁺ + 3e⁻ ,
wenn A ein dreiwertiges Metall ist,
X ein Anion ist;
wobei das Erzeugen des elektrischen Potenzials ferner eine Reduktion an der zweiten Elektrode bewirkt, aus der Anionen hervorgehen, die Salze mit Alkalimetallionen, Me⁺, bilden; und die zum Leiten von Me⁺-Ionen durch den Alkaliionen leitenden Separator von der ersten Elektrode zur zweiten Elektrode führt.

7. Verfahren Anspruch 6, wobei der Separator ein festes Alkalimetallionen-Superionenleitermaterial ist, wobei es sich bei dem Alkalimetall um Na, K oder Li handelt.

8. Verfahren nach Anspruch 6 oder Anspruch 7, wobei das Metall A Aluminium, Magnesium, Calcium, Zink, Beryllium oder Eisen umfasst.

9. Verfahren nach einem der Ansprüche 6 bis 8, wobei das Metall A entweder ein zweiwertiges oder ein dreiwertiges Metall ist.

10. Verwendung einer wiederaufladbaren Batterie zum Verhindern von Dendritenbildung, wobei die wiederaufladbare Batterie umfasst:
die erste Elektrode, bei der es sich um ein Metall handelt, wobei das Metall kein Alkalimetall ist, und eine zweite Elektrode, umfassend ein oxidiertes S oder I₂-Material, das zur elektrochemischen Reduktion durch das Metall imstande ist;
einen Alkaliionen leitenden, im Wesentlichen unporösen Separator, der zwischen der ersten und zweiten Elektrode angeordnet ist; und
einen ersten Elektrolyten, der die erste Elektrode kontaktiert, umfassend ein polares Lösungsmittel, das nicht mit dem Metall der ersten Elektrode reaktiv ist; und ein Salz, welches ein Alkaliion trägt, wobei das Salz zumindest teilweise in dem polaren Lösungsmittel löslich ist; und einen zweiten Elektrolyten, der die zweite Elektrode kontaktiert, wobei der zweite Elektrolyt ein Lösungsmittel umfasst, welches das Alkalisalz, das sich bei Reduktion der zweiten Elektrode bildet, zumindest teilweise löst;
**dadurch gekennzeichnet, dass** das polare Lösungsmittel ein polares organisches Lösungsmittel oder eine ionische Flüssigkeit ist.

11. Verwendung nach Anspruch 10, wobei der erste Elektrolyt und der zweite Elektrolyt gleich sind.

12. Verwendung nach Anspruch 10, wobei das als Teil des ersten Elektrolyten verwendete Lösungsmittel eine ionische Flüssigkeit umfasst.

## Revendications

1. Batterie (100) comprenant :
une première électrode (104) composée d'un métal autre qu'un métal alcalin ;
une deuxième électrode (108) comprenant un matériau S ou I₂ oxydé, pouvant être réduit par voie électrochimique par le métal de la première électrode (104) ;
un séparateur conducteur d'ions alcalins et substantiellement non poreux (120), disposé entre la première (104) et la deuxième (108) électrode ;
un premier électrolyte (134) au contact de la première électrode (104), le premier électrolyte (134) comprenant :
un solvant (154) non réactif avec le métal ; et
un sel renfermant un ion alcalin pouvant être amené par conduction à travers le séparateur (120), le sel étant soluble, au moins partiellement, dans le solvant (154) ;
un deuxième électrolyte (138) au contact de la deuxième électrode (108), le deuxième électrolyte (138) dissolvant au moins partiellement le sel se formant sur le matériau oxydé, qui est réduit par voie électrochimique ;
**caractérisée en ce que** le solvant est un solvant organique polaire ou un liquide ionique.

2. Batterie selon la revendication 1, le séparateur (120) étant un matériau conducteur à ion métallique alcalin solide, le métal alcalin étant un des suivants : Na, K ou Li.

3. Batterie selon la revendication 1 ou la revendication 2, le séparateur (120) étant sélectionné dans le groupe composé d'un matériau séparateur du verre, d'un matériau à séparateur céramique électroniquement isolant, et d'une membrane composite à couches céramique-polymère conductrice d'ions alcalins comprenant des polymères sélectifs pour ions alcalins en couches sur un matériau d'électrolyte solide en céramique conductrice d'ions alcalins.

4. Batterie selon une quelconque des revendications 1 à 3, le métal comprenant les suivants : aluminium, magnésium, calcium, zinc, béryllium ou fer.

5. Batterie selon une quelconque des revendications précédentes, le premier électrolyte (134) et le deuxième électrolyte (138) étant identiques.

6. Méthode pour charger ou décharger une batterie possédant une première électrode, composée d'un métal A, le métal A n'étant pas un métal alcalin, une deuxième électrode comprenant un matériau S ou I₂ oxydé, pouvant être réduit par voie électrochimique par le métal A, un séparateur substantiellement non poreux conducteur d'ions alcalins disposé entre la première et la deuxième électrode ; un premier électrolyte étant au contact de la première électrode comprenant un solvant polaire,
le solvant polaire étant un solvant organique polaire ou un liquide ionique non réactif avec le métal A et un sel renfermant l'ion alcalin, le sel étant soluble, au moins partiellement, dans le solvant polaire,
et un deuxième électrolyte étant au contact de la deuxième électrode, la deuxième électrode comprenant un solvant dissolvant, au moins partiellement, le sel alcalin qui se forme lors de la réduction du deuxième électrolyte ; la méthode étant :
(i) une méthode de chargement d'une batterie, comprenant :
l'application d'un potentiel de charge électrique aux première et deuxième électrodes afin d'entraîner la réaction suivante à la première électrode :
si A est un métal divalent :
AX₂ + 2Me⁺ + 2e⁻ → A + 2MeX;
si A est un métal trivalent :
AX₃ + 3Me⁺ + 3e- → A + 3MeX; and
si A est un métal monovalent :
AX + Me⁺ + e- → A +
X étant un anion ;
l'application du potentiel de charge électrique engendrant également une oxydation à la deuxième électrode, donnant lieu à la libération d'ions métalliques alcalins, Me⁺, depuis le solvant, et la conduction d'ions Me⁺ dans le séparateur conducteur d'ions alcalins de la deuxième électrode à la première électrode ; ou
(ii) une méthode de décharge d'une batterie comprenant :
la génération d'un potentiel électrique entre les première et deuxième électrodes pour causer la réaction suivante à la première électrode :
A + 2MeX → AX₂ + 2Me⁺ + 2e⁻,
si A est un métal divalent,
A + MeX → AX + Me⁺ + e⁻
si A est un métal monovalent,
A + 3MeX → AX₃ + 3Me⁺ + 3e⁻,
si A est un métal trivalent,
X étant un anion;
la génération du potentiel électrique engendrant également une réduction à la deuxième électrode, donnant lieu à des anions formant des sels avec des ions métalliques alcalins, Me⁺; et la conduction d'ions Me⁺ à travers le séparateur conducteur d'ions alcalins de la première électrode à la deuxième électrode.

7. Méthode selon la revendication 6, le séparateur étant un matériau supraconducteur d'ions de métal alcalin solide, le métal alcalin étant un des suivants : Na, K ou Li.

8. Méthode selon la revendication 6 ou la revendication 7, le métal A comprenant de l'aluminium, du magnésium, du calcium, du zinc, du béryllium, ou du fer.

9. Méthode selon une quelconque des revendications 6 à 8, le métal A étant un métal divalent ou un métal trivalent.

10. L'emploi d'une batterie rechargeable pour inhiber la formation de dendrites, la batterie rechargeable comprenant :
la première électrode, qui est un métal, ce métal n'étant pas un métal alcalin, et une deuxième électrode, comprenant un matériau S ou I₂ oxydé capable d'une réduction électrochimique par le métal ;
un séparateur conducteur d'ions alcalins et substantiellement non poreux, disposé entre la première et la deuxième électrodes ; et
un premier électrolyte au contact de la première électrode comprenant un solvant polaire non réactif avec le métal de la première électrode et un sel renfermant un ion alcalin, le sel étant soluble, au moins partiellement, dans le solvant polaire ; et
un deuxième électrolyte au contact de la deuxième électrode, le deuxième électrolyte comprenant un solvant dissolvant au moins partiellement le sel alcalin se formant lors de la réduction de la deuxième électrode ;
**caractérisé en ce que** le solvant polaire est un solvant organique polaire ou un liquide ionique.

11. L'emploi selon la revendication 10, le premier électrolyte et le deuxième électrolyte étant les mêmes.

12. L'emploi selon la revendication 10, le solvant utilisé dans le cadre du premier électrolyte comprenant un liquide ionique.
